(19) Europäisches Patentamt
European Patent Office
Office européen des brevets

(11) Veröffentlichungsnummer: **0 048 222**
**B1**

# (12) EUROPÄISCHE PATENTSCHRIFT

(45) Veröffentlichungstag der Patentschrift: **27.12.84**

(51) Int. Cl.³: **C 08 K 5/18**, C 08 L 101/04, C 08 L 27/06

(21) Anmeldenummer: **81810373.1**

(22) Anmeldetag: **10.09.81**

(54) **Stabilisierung von chlorhaltigen Thermoplasten mit m-Aminophenolen.**

(30) Priorität: **16.09.80 CH 6927/80**

(43) Veröffentlichungstag der Anmeldung: **24.03.82 Patentblatt 82/12**

(45) Bekanntmachung des Hinweises auf die Patenterteilung: **27.12.84 Patentblatt 84/52**

(84) Benannte Vertragsstaaten: **DE FR GB NL**

(56) Entgegenhaltungen:
**US - A - 3 020 258**
**US - A - 3 139 451**
**US - A - 3 450 764**

**Die Akte enthält technische Angaben, die nach dem Eingang der Anmeldung eingereicht wurden und die nicht in dieser Patentschrift enthalten sind.**

(73) Patentinhaber: **CIBA-GEIGY AG, Postfach, CH-4002 Basel (CH)**

(72) Erfinder: **Wirth, Hermann O., Dr., Lessingstrasse 24, D-6140 Bensheim 3 (DE)**
Erfinder: **Büssing, Jürgen, Dr., Altengassweg 38, D-6140 Bensheim (DE)**
Erfinder: **Friedrich, Hans-Helmut, Am Rauhenstein 8, D-6147 Lautertal 2 (DE)**

**EP 0 048 222 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die vorliegende Erfindung betrifft die Stabilisierung von chlorhaltigen Thermoplasten durch Zusatz von m-Aminophenolen.

Chlorhaltige Polymerisat müssen gegen den schädigenden Einfluss von Licht und Wärme geschützt werden. Insbesondere die Verarbeitung des Kunststoffes zu Formteilen ist mit einer Wärmebelastung verbunden, die eine Dunkelfärbung und Versprödung bewirkt, wenn nicht geeignete Zusätze beigefügt werden. Als Stabilisatoren werden bisher insbesondere Organozinnverbindungen, Metallcarboxylate oder Aminocrotonate verwendet. Die mit diesen Zusatzstoffen erzielte Wirkung ist in der Praxis nicht immer ausreichend, so dass durchaus ein Bedürfnis nach verbesserten, besonders auch metallfreien Thermostabilisatoren besteht.

Aminophenole, wie beispielsweise N-Phenyl-m-aminophenol,sind besonders als Antioxidantien für Natur- und Kunststoffkautschuk bekannt (US Patent 3 450 764; vgl. auch J.Voigt «Stabilisierung der Kunststoffe», Springer Verlag 1966, S. 286). Ferner sind in den US-Patentschriften 3 139 451, 3 079 366 und 2 657 983 o- und p-Aminophenole offenbart, die als Antioxidantien und Lichtschutzmittel in chlorhaltigen Polymeren verwendet werden. Aus diesen Schriften geht nicht hervor, dass neben der Art, wie die Aminogruppe substituiert ist, auch die Stellung dieser Aminogruppe am Phenolring einen Einfluss auf die Wirksamkeit des Stabilisators haben könnte. Es hat sich nämlich gezeigt, dass gerade die m-Aminophenole ausgezeichnete Thermostabilisatoren für chlorhaltige Thermoplaste, wie z.B. PVC, sind, die die Nachteile des Standes der Technik nicht oder nicht in solchem Masse aufweisen und vor allem nicht notwendigerweise mit Metallverbindungen kombiniert werden müssen.

Die Erfindung betrifft somit chlorhaltige Thermoplaste, enthaltend ein m-Aminophenol der Formel I,

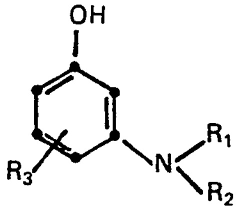

(I)

worin $R_1$ Wasserstoff, $C_1$–$C_{18}$-Alkyl, $C_5$–$C_7$-Cycloalkyl, gegebenenfalls mit $C_1$–$C_4$-Alkyl oder mit Hydroxy substituiertes Phenyl oder eine der Gruppen $-C(R_4)=C(R_5)-COOR_6$, $-CH_2CH_2-CN$,

-CO- 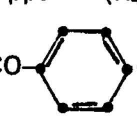 oder $-CO-CH_2-CO-CH_3$, $R_2$ Wasserstoff, $C_1$–$C_{18}$-Alkyl, $C_5$–$C_7$-Cycloalkyl, gegebenenfalls mit $C_1$–$C_4$-Alkyl oder mit Hydroxy substituiertes Phenyl oder eine Gruppe $-CH_2CH_2-CN$, $R_3$ Wasserstoff, Hydroxy, $C_1$–$C_4$-Alkyl, $C_2$–$C_5$-Alkoxycarbonyl, Aminocarbonyl oder Cyano, $R_4$ und $R_5$ unabhängig voneinander Wasserstoff oder $C_1$–$C_4$-Alkyl und $R_6$ $C_1$–$C_{18}$-Alkyl oder $C_5$–$C_7$-Cycloalkyl bedeuten.

$R_1$, $R_2$ und $R_6$ als $C_1$–$C_{18}$-Alkyl sind beispielsweise Methyl, Äthyl, n-Propyl, verzweigtes oder unverzweigtes Heptadecyl oder Octadecyl, vor allem aber verzweigtes oder unverzweigtes Octyl, Nonyl, Decyl, Undecyl, Dodecyl, Tridecyl, Tetradecyl, Pentadecyl oder Hexadecyl, $R_1$, $R_2$ und $R_6$ als $C_5$–$C_7$-Cycloalkyl sind insbesondere Cyclopentyl oder Cyclohexyl, $R_1$ bzw. $R_2$ als mit $C_1$–$C_4$-Alkyl substituiertes Phenyl ist beispielsweise Methylphenyl, Dimethylphenyl, Äthylphenyl oder Isopropylphenyl, $R_1$ bzw. $R_2$ als mit Hydroxy substituiertes Phenyl ist beispielsweise o- oder p-Hydroxyphenyl, vor allem m-Hydroxyphenyl, $R_3$, $R_4$ und $R_5$ als $C_1$–$C_4$-Alkyl sind beispielsweise Methyl, Äthyl, Isopropyl, Butyl oder t.Butyl, $R_3$ in der Bedeutung $C_2$–$C_5$-Alkoxycarbonyl ist insbesondere Methoxycarbonyl oder Äthoxycarbonyl.

Bevorzugt enthalten die erfindungsgemässen chlorhaltigen Thermoplaste solche m-Aminophenole der Formel I, worin $R_1$ Wasserstoff, verzweigtes oder unverzweigtes $C_8$–$C_{16}$-Alkyl, Cyclohexyl, Phenyl, Methylphenyl, eine Gruppe $-C(R_4)=C(R_5)-COOR_6$, $-CH_2CH_2-CN$,

-CO- 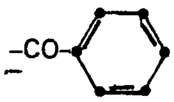 oder $-CO-CH_2-CO-CH_3$, $R_2$ Wasserstoff, $R_3$ Wasserstoff, Hydroxy, Methyl, Methoxycarbonyl, Aminocarbonyl oder Cyano, $R_4$ und $R_5$ unabhängig voneinander Wasserstoff oder Methyl und $R_6$ Methyl oder Cyclohexyl bedeuten.

Besonders bevorzugt enthalten die erfindungsgemässen chlorhaltigen Thermoplaste m-Aminophenol, 3-Amino-6-methoxycarbonylphenol, N-Phenyl-m-aminophenol, N-(2'-Methyl)-phenyl-m-aminophenol, N-Cyclohexyl-m-aminophenol oder N-n-Dodecyl-m-aminophenol, 2-Amino-4-hydroxybenzonitril, 2-Amino-4-hydroxybenzamid, 3,5-Dihydroxy-N-benzoylanilin, 3-(3-Hydroxyanilino)-2-methyl-acrylsäuremethylester, 3-(3-Hydroxyanilino)-3-methylacrylsäurecyclohecylester, 3-Hydroxy-5-methyl-diphenylamin, 3-Hydroxy-diphenylamin, N-Acetoacetyl-m-aminophenol, N-(2-(Cyanoäthyl)-m-aminophenol.

Die m-Aminophenole der Formel I sind bekannt und können nach an sich bekannten Methoden hergestellt werden.

Die erfindungsgemäss zu stabilisierenden chlorhaltigen Thermoplaste sind bevorzugt Vinylchloridpolymere oder -copolymere. Bevorzugt sind dabei Suspensions- und Massepolymere und ausgewaschene, also emulgatorarme Emulsionspolymere. Als Comonomere für die Copolymerisate kommen z.B. in Frage: Vinylacetat, Vinylidenchlorid, Transdichloräthan, Äthylen, Propylen, Butylen, Maleinsäure, Acrylsäure, Fumarsäure, Itaconsäure. Weitere geeignete chlorhaltige Thermoplaste sind nachchloriertes PVC und chlorierte Polyolefine, ferner Pfropfpolymerisate von

PVC mit EVA (Äthylen-Vinylacetat) und MBS (Methylacrylat-Butadien-Styrol).

Die Herstellung der erfindungsgemäss stabilisierten Thermoplaste erfolgt nach bekannten Verfahren. Die m-Aminophenol-Stabilisatoren werden den zu stabilisierenden chlorhaltigen Thermoplasten vor der Verarbeitung in üblichen Einrichtungen im allgemeinen in Mengen von 0,05 bis 5, vorzugsweise 0,1 bis 3 Gew.-%, bezogen auf den chlorhaltigen Thermoplasten, einverleibt. Eine homogene Mischung kann z.B. mit Hilfe eines Zweiwalzenmischers bei 150 bis 210° erzielt werden.

Eine noch verbesserte stabilisierende Wirkung erhält man beim zusätzlichen Einsatz in üblichen Mengen mindestens eines der herkömmlichen PVC-Stabilisatoren und/oder Zusätze, wie Epoxyverbindungen, vorzugsweise epoxidierte Fettsäureester, wie epoxidiertes Sijabohnenöl, Phosphite, organische Metallverbindungen von Metallen der zweiten Haupt- und Nebengruppe des Periodensystems, wie z.B. Metallcarbocylate oder Metallphenolate, insbesondere von Carbonsäuren mit 8 bis 20 C-Atomen oder von Phenolen mit 6 bis 20 C-Atomen, wie beispielsweise Ca- oder Zn-Stearat, oder auch anorganische Salze von Metallen der zweiten Nebengruppe des Periodensystems, wie z.B. $ZnCl_2$ oder ferner auch Organozinnverbindungen, insbesondere Monoorganozinnverbindungen.

Costabilisatoren werden bevorzugt in Mengen von 0,05 bis 6, besonders 0,1 bis 3 Gew.-% bezogen auf die gesamte Zusammensetzung eingearbeitet. Das Verhältnis von m-Aminophenol zu Costabilisatoren kann hierbei etwa 2:1 bis 1:8 betragen.

Besonders geeignete herkömmliche Phosphite sind Phosphite der allgemeinen Formeln II, III oder IV

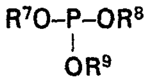 (II)

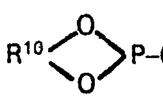 (III)

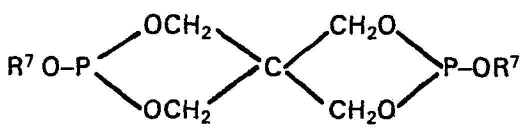 (IV)

worin $R^7$, $R^8$ und $R^9$ unabhängig voneinander $C_1$–$C_{18}$-Alkyl, $C_1$–$C_{20}$-Alkenyl, $C_6$–$C_{12}$-Aryl, gegebenenfalls durch Hydroxy oder $C_1$–$C_4$-Alkoxy substituiertes $C_7$–$C_{19}$-Alkaryl oder $C_5$–$C_7$-Cycloalkyl bedeuten und $R^{10}$ gegebenenfalls durch $C_1$–$C_{18}$-Alkyl, $C_2$–$C_{13}$-Alkoxymethyl oder Alkylthiomethyl oder durch Phenyl substituiertes $C_2$–$C_6$-Alkylen, gegebenenfalls durch $C_1$–$C_4$-Alkyl substituirtes $C_6$–$C_{10}$-Arylen oder $C_5$–$C_7$-Cycloalkylen bedeutet.

Bedeuten $R^7$, $R^8$ und $R^9$ $C_1$–$C_{18}$-Alkyl, so handelt es sich z.B. um Methyl, Äthyl, n-Propyl, Isopropyl, n-Butyl, sec.-Butyl, tert.-Butyl, n-Pentyl, n-Hexyl, n-Octyl, n-Nonyl, Decyl, Dodecyl, Tetradecyl, Hexadecyl oder Octadecyl. Bevorzugt sind Alkylgruppen mit 8 bis 18 C-Atomen.

Bedeuten $R^7$, $R^8$ und $R^9$ $C_1$–$C_{20}$-Alkenyl, so handelt es sich beispielsweise um Allyl, 2-Butenyl, Pentenyl, Hexenyl, Heptenyl oder Oleyl.

$R^7$, $R^8$ und $R^9$ können als Aryl z.B. Naphthyl, Biphenyl oder bevorzugt Phenyl sein.

Als gegebenenfalls mit Hydroxy oder $C_1$–$C_4$-Alkoxy substituiertes $C_7$–$C_{19}$-Alkaryl bedeuten $R^7$, $R^8$ und $R^9$ beispielsweise Tolyl, Äthylphenyl, Xylyl, Cumyl, Cymyl, Kresyl, 4-Methoxyphenyl, 2,4-Dimethoxyphenyl, Alkoxyphenyl oder Butoxyphenyl.

Als $C_5$–$C_7$-Cycloalkyl sind $R^7$, $R^8$ und $R^9$ beispielsweise Cyclopentyl, Cycloheptyl und insbesondere Cyclohexyl.

Als gegebenenfalls $C_1$–$C_{18}$-Alkyl oder Phenyl substituiertes $C_2$–$C_6$-Alkylen kann $R^{10}$ z.B. durch Methyl, Äthyl, Propyl, Isopropyl, Butyl, Hexyl, Decyl, Dodecyl, Tetradecyl, Octadecyl oder Phenyl aubstituiertes Äthylen, Propylen oder Hexamethylen und insbesondere 2-Propyl-2-methylpropylen, 1-Propyl-2-äthyl-propylen, Phenyläthylen oder auch unsubstituiertes Äthylen sein.

$R^{10}$ kann durch $C_2$–$C_{13}$-Alkoxymethyl oder Alkylthiomethyl substituiertes $C_2$–$C_6$-Alkylen z.B. Äthoxymethyl- Butoxymethyl-, Octyloxymethyl- oder Dodecylthiomethyläthylen sein.

$R^{10}$ ist als gegebenenfalls durch $C_1$–$C_4$-Alkyl substituiertes $C_6$–$C_{10}$-Arylen z.B. tert.-Butylphenylen oder unsubstituiertes Phenylen.

$R^{10}$ ist als $C_5$–$C_7$-Cycloalkylen insbesondere Cyclohexylen.

Von den Phosphiten der Formel IV sind diejenigen bevorzugt, worin $R^7$ $C_1$–$C_{18}$ und insbesondere $C_8$–$C_{18}$-Alkyl und vor allem Octyl oder Decyl bedeutet.

Ganz besonders geeignete Phosphite sind Trioctyl-, Tridecyl-, Tridodecyl-, Tritetradecyl-, Tristearyl-, Trioleyl-, Triphenyl-, Trikresyl-, Trisp-nonylphenyl- oder Tricyclohexylphosphit und besonders bevorzugt sind die Aryl-Dialkyl- sowie die Alkyl-Diaryl-Phosphite wie z.B. Phenyldidecyl-, Nonylphenyl-didecyl-, (2,4-Di-tert.-butylphenyl)-di-didecylphosphit, (2,6-Di-tert.-butylphenyl)-di-dodecylphosphit.

Eine besonders gute Stabilisierung erhält man, wenn zu den m-Aminophenolen der Formel I mindestens eine Epoxyverbindung und/oder ein Metallcarboxylat oder -phenolat eines Metalls der zweiten Hauptgruppe des Periodensystems, vorzugsweise ein Calziumcarboxylat und insbesondere Calziumstearat, zugesetzt wird. Noch besser wird die stabilisierende Wirkung, wenn man zusätzlich noch mindestens eines der oben definierten Phosphite oder mindestens ein Zink- oder Cadmiumcarboxylat oder eine Organozinnverbindung einsetzt. Von den Organozinnverbindungen sind Monoorganozinnverbindungen bevorzugt.

Eine ganz besonders gute Stabilisierung erhält man jedoch, wenn die chlorhaltigen Thermoplasten mit einem Gemisch aus mindestens einem m-Aminophenol der Formel I, mindestens einer Epoxyverbindung und/oder einem Metallcarboxylat oder -phenolat eines Metalls der zweiten Hauptgruppe des Periodensystems, mindestens einem Zink- oder Cadmiumcarboxylat oder einer Organozinnverbindung und mindestens einem der oben definierten Phosphite stabilisiert werden.

Unter diesen Bedingungen gewährleistet überraschenderweise schon eine relativ geringe Konzentration eines m-Aminophenols der Formel I eine hervorragende Stabilisierung.

Je nach dem Verwendungszweck der stabilisierten Thermoplaste können vor oder mit der Einarbeitung des Stabilisators auch weitere Zusätze eingearbeitet werden, wie z.B. Gleitmittel (bevorzugt Montanwachse oder Glycerinester), Fettsäureester, Paraffine, Weichmacher, Füllstoffe, Russ, Asbest, Kaolin, Talk, Glasfasern, Modifikatoren (wie etwa Schlagzäh-Zusätze), optische Aufheller, Pigmente, Lichtstabilisatoren, UV-Absorber, Flammschutzmittel, Antistatika oder weitere Costabilisatoren wie z.B. Antioxidantien, insbesondere phenolische Antioxidantien. Die erfindungsgemässen Thermoplaste können nach den dafür gebräuchlichen Formgebungsverfahren z.B. durch Extrusion, Spritzgiessen oder Kalandrieren zu Formteilen verarbeitet werden. Auch die Verwendung als Plastisole ist möglich.

Die Thermostabilisierung mit den erfindungsgemäss verwendeten Stabilisatoren ist in den erfindungsgemässen Thermoplasten hervorragend. Auch die Lichtstabilität ist gut.

Die nachfolgenden Beispiele dienen der näheren Erläuterung der Erfindung. Dabei sind, wenn nicht anders definiert, Teile Gewichtsteile und Prozente Gewichtsprozente.

*Allgemeine Testbeschreibung:*

Eine Trockenmischung, hergestellt nach einer in den Beispielen 1–3 beschriebenen Rezeptur A–C, wird auf einem Mischwalzwerk 5 Minuten bei 180 °C gewalzt. Vom gebildeten Walzfell entnimmt man ein Folienstück von 0,3 mm Dicke und bestimmt den Yellowness-Index (YI) dieser Probe nach ASTM D 1925–70. Die Ergebnisse sind in den Tabellen 1–3 zusammengefasst.

Beispiel 1

Mit Trockenmischung nach Rezeptur A

Rezeptur A:

100 g S–PVC (K–Wert 65)
2 g epoxidiertes Sojaöl
2,5 mmol Testsubstanz (in g)

Tabelle 1

| Testsubstanz | YI |
|---|---|
| keine | ca.25 |
| m-Aminophenol | 8,1 |
| N-Phenyl-m-aminophenol | 7,5 |
| N-(2'-Methyl)-phenyl-m-aminophenol | 9,4 |
| N-Cyclohexyl-m-aminophenol | 10,9 |
| N-n-Dodecyl-m-aminophenol | 10,2 |

Beispiel 2

Mit Trockenmischung nach Rezeptur B

Rezeptur B:

100 Teile S–PVC (K–Wert 58)
4,0 Teile epoxidiertes Sojaöl
0,35 Teile Calciumstearat
0,15 Teile Zinkstearat
0,3 Teile Phenyl-didecylphosphit
0,7 Teile komb. Gleitmittel (niedermolekulares Polyäthylen, Stearylalkohlol und Stearylstearats
0,5 Teile Fliesshilfsmittel (Copolymerisat von Acrylsäure- und Methacrylsäureester)
8,0 Teile Schlagzähzusatz (Terpolymerisat von Methylmethacrylat, Styrol, Butadien)
0,6 Teile Testsubstanz

Tabelle 2

| Testsubstanz | YI |
|---|---|
| keine | ca. 30 |
| N-Phenyl-m-aminophenol | 4,8 |
| N-(2'-Methyl)-phenyl-m-aminophenol | 3,0 |
| 3-Amino-6-methoxycarbonyl-phenol | 3,6 |
| N-Cyclohexyl-m-aminophenol | 2,2 |
| N-n-Dodecyl-m-aminophenol | 2,1 |

Beispiel 3

Mit Trockenmischung nach Rezeptur C

Rezeptur C:

100 g S–PVC (K–Wert 65)
2,5 g epoxidiertes Sojaöl
1,2 g Tridecylphosphit
2,5 mmol Testsubstanz (in g)

Tabelle 3

| Testsubstanz | YI |
|---|---|
| keine | 33–45 |
| N-Phenyl-m-aminophenyl | 5,2 |
| m-Aminophenol | 4,9 |

Beispiele 4–12

Eine Trockenmischung bestehend aus den in den nachfolgenden Rezepturen angegebenen Ingredienzen wird auf einem Mischwalzwerk 5 Minuten bei 180 °C gewalzt. Vom gebildeten Walzfell werden Testfolienstücke von 0,3 mm Dicke entnommen. Die Folienproben werden in einem Ofen bei 180 °C thermisch belastet und im zeitlichen Abstand von 10 Minuten an einer Probe der Yellowness Index (YI) nach ASTM D 1925–70 bestimmt. Die Ergebnisse sind in den nachstehenden Tabellen zusammengefasst.

Beispiel 4

Rezeptur:

0,46 Tl.3-Hydroxy-diphenylamin
100 Tl.S–PVC (K–Wert 64)
2 Tl.Epoxidiertes Sojaöl

Statischer Hitzetest (180 °C)

| Belastungs-zeit [min] | 0 | 10 | 20 | 30 | 40 | 50 | 60 |
|---|---|---|---|---|---|---|---|
| Yellowness-Index | 6,5 | 15,5 | 28,4 | 45,3 | 71 | 99 | >100 |

Beispiel 5
Rezeptur:
0,46 Tl. 3-Hydroxy-diphenylamin
100 Tl. S–PVC (K–Wert 64)
2 Tl. Epoxidiertes Sojaöl
0,28 Tl. Phenyl-didecylphosphit

Statischer Hitzetest (180 °C)

| Belastungs-zeit [min] | 0 | 10 | 20 | 30 | 40 | 50 | 60 |
|---|---|---|---|---|---|---|---|
| Yellowness-Index | 4,3 | 13,8 | 24,5 | 37,3 | 63 | 92 | >100 |

Beispiel 6
Rezeptur:
0,46 Tl. 3-Hydroxy-diphenylamin
100 Tl. S–PVC (K–Wert 64)
2 Tl. Epoxidiertes Sojaöl
0,28 Tl. Phenyl-didecylphosphit
0,02 Tl. Zinkneodecanoat

Statischer Hitzetest (180 °C)

| Belastungs-zeit [min] | 0 | 10 | 20 | 30 | 40 | 50 | 60 |
|---|---|---|---|---|---|---|---|
| Yellowness-Index | 3,0 | 8,7 | 15,2 | 28 | 47 | 77 | >100 |

Beispiel 7
Rezeptur:
0,3 Tl. 3-Hydroxy-diphenylamin
100 Tl. S–PVC (K–Wert 64)
3 Tl. Epoxidiertes Sojaöl
0,35 Tl. Calciumstearat
0,15 Tl. Zinkstearat
0,4 Tl. Phenyl-didecylphosphit

Statischer Hitzetest (180 °C)

| Belastungs-zeit [min] | 0 | 10 | 20 | 30 | 40 | 50 | 60 | 70 | 80 |
|---|---|---|---|---|---|---|---|---|---|
| Yellowness-Index | 5,2 | 7,9 | 12 | 16,5 | 22 | 35 | 47 | 80 | >100 |

Beispiel 8
Rezeptur:
0,3 Tl. 3-Hydroxy-diphenylamin
100 Tl. S–PVC (K–Wert 64)
3 Tl. Epoxidiertes Sojaöl
0,35 Tl. Calciumstearat
0.15 Tl. Zinkstearat
1,2 Tl. Phenyl-didecylphosphit

Statischer Hitzetest (180 °C)

| Belastungs-zeit [min] | 0 | 10 | 20 | 30 | 40 | 50 | 60 | 70 | 80 | 90 |
|---|---|---|---|---|---|---|---|---|---|---|
| Yellowness-Index | 3,0 | 8,4 | 10,3 | 13 | 17 | 27 | 32 | 44 | 61 | 85 |

Beispiel 9

Rezeptur:

0,6 Tl. 2-Amino-4-hydroxybenzamid
100 Tl. S–PVC (K–Wert 58)
4 Tl. Epoxidiertes Sojaöl
0,35 Tl. Calciumstearat
0,15 Tl. Zinkstearat
0,3 Tl. Phenyl-didecylphosphit
0,7 Tl. Gleitmittel+)
0,5 Tl. Fliesshilfsmittel+)
8,0 Tl. Schlagzähzusatz+)

Statischer Hitzetest (180 °C)

| Belastungszeit [min] | 0 | 10 | 20 | 30 | 40 | 50 | 60 | 70 | 80 | 90 |
|---|---|---|---|---|---|---|---|---|---|---|
| Yellowness-Index | 17 | 19,6 | 21,7 | 25,0 | 30,7 | 38,4 | 58,3 | 80,0 | 99 | >100 |

Beispiel 10

Rezeptur:

0,6 Tl. 3-Hydroxy-5-methyl-diphenylamin
100 Tl. S–PVC (K–Wert 58)
4 Tl. Epoxidiertes Sojaöl
0,35 Tl. Calciumstearat
0,15 Tl. Zinkstearat
0,3 Tl. Phenyl-didecylphosphit
0,7 Tl. Gleitmittel+)
0,5 Tl. Fliesshilfsmittel+)
8,0 Tl. Schlagzähzusatz+)

Statischer Hitzetest (180 °C)

| Belastungszeit [min] | 0 | 10 | 20 | 30 | 40 | 50 | 60 |
|---|---|---|---|---|---|---|---|
| Yellowness-Index | 2,9 | 5,5 | 8,5 | 20 | 42 | 45 | >100 |

Beispiel 11

Rezeptur:

0,6 Tl. N-Acetoacetyl-m-aminophenol
100 Tl. S–PVC (K–Wert 58)
4 Tl. Epoxidiertes Sojaöl
0,35 Tl. Calciumstearat
0,15 Tl. Zinkstearat
0,3 Tl. Phenyl-didecylphosphit
0,7 Tl. Gleitmittel+)
0,5 Tl. Fliesshilfsmittel+)
8,0 Tl. Schlagzähzusatz+)

Statischer Hitzetest (180 °C)

| Belastungszeit[min] | 0 | 10 | 20 | 30 | 40 | 50 |
|---|---|---|---|---|---|---|
| Yellowness-Index | 3,5 | 8,2 | 16,8 | 58,7 | 91,1 | >100 |

Beispiel 12

Rezeptur: (Vergleich ohne m-Aminophenol)

100 Tl. S–PVC (K–Wert 58)
4 Tl. Epoxidiertes Sojaöl
0,35 Tl. Calciumstearat
0,15 Tl. Zinkstearat
0,3 Tl. Phenyl-didecylphosphit
0,7 Tl. Gleitmittel+)
0,5 Tl. Fliesshilfsmittel+)
8,0 Tl. Schlagzähzusatz+)

Statischer Hitzetest (180 °C)

| Belastungszeit [min] | 0 | 10 | 20 | 30 |
|---|---|---|---|---|
| Yellowness-Index | 11,8 | 21,3 | 26 | >100 |

+) vgl. Bsp. 2

Beispiele 13–19

Dehydrochlorierungstest gemäss DIN 53 381, B 1.3 von erfindungsgemäss einzusetzenden Stabilisatoren mit Zusatz weiterer Costabilisatoren, gemäss folgenden Rezepturen.

Beispiel 13

Rezeptur: S–PVC (K–Wert 64) ohne Additive

Dehydrochlorierungstest (180 °C)

| Belastungszeit [min.] | 10 | 20 | 30 | 40 | 50 |
|---|---|---|---|---|---|
| Abgespaltener Chlorwasserstoff [%] | 0 | 0,09 | 0,23 | 0,37 | 0,53 |

Beispiel 14

Rezeptur:

0,46 Tl. 3-Hydroxy-diphenylamin
100 Tl. S–PVC (K–Wert 64)
2 Tl. Epoxidiertes Sojaöl

Dehydrochlorierungstest (180 °C)

| Belastungszeit [min] | 10 | 20 | 30 | 40 |
|---|---|---|---|---|
| Abgespaltener Chlorwasserstoff[%] | 0 | 0 | 0,035 | 0,20 |

Beispiel 15

Rezeptur:

046 Tl. 3-Hydroxy-diphenylamin
100 Tl. S–PVC (K–Wert 64)
2 Tl. Epoxidiertes Sojaöl
1,26 Tl. Tridecylphosphit

Dehydrochlorierungstest (180 °C)

| Belastungszeit [min] | 10 | 20 | 30 | 40 | 50 |
|---|---|---|---|---|---|
| Abgespaltener Chlorwasserstoff [%] | 0 | 0 | 0 | 0,005 | 0,11 |

Beispiel 16

Rezeptur:

0,38 Tl. 2-Amino-4-hydroxybenzamid
100 Tl. S–PVC (K–Wert 64)
2 Tl. Epoxidiertes Sojaöl

Dehydrochlorierungstest (180 °C)

| Belastungszeit [min] | 10 | 20 | 30 | 40 | 50 | 60 |
|---|---|---|---|---|---|---|
| Abgespaltener Chlorwasserstoff [%] | 0 | 0 | 0,015 | 0,025 | 0.06 | 0,16 |

Beispiel 17

Rezeptur:

0,33 Tl. 2-Amino-4-hydroxybenzonitril
100 Tl. S–PVC (K–Wert 64)
2 Tl. Epoxidiertes Sojaöl

Dehydrochlorierungstest (180 °C)

| Belastungszeit [min] | 10 | 20 | 30 | 40 | 50 | 60 |
|---|---|---|---|---|---|---|
| Abgespaltener Chlorwasserstoff [%] | 0 | 0,02 | 0,035 | 0,06 | 0,11 | 0,30 |

Beispiel 18

Rezeptur:

0,57 Tl. 3,5-Dihydroxy-N-benzoylanilin
100 Tl. S–PVC (K–Wert 64)
2 Tl. Epoxidiertes Sojaöl

Dehydrochlorierungstest (180 °C)

| Belastungszeit [min] | 10 | 20 | 30 | 40 | 50 | 60 | 70 | 80 |
|---|---|---|---|---|---|---|---|---|
| Abgespaltener Chlorwasserstoff [%] | 0 | 0 | 0,015 | 0,030 | 0,050 | 0,090 | 0,150 | 0,28 |

Beispiel 19

Rezeptur:
0,52 Tl. 3-(3-Hydroxyanilino)-2-methyl-acrylsäuremethylester
100 Tl. S–PVC (K–Wert 64)
2 Tl. Epoxidiertes Sojaöl

Dehydrochlorierungstest (180 °C)

| Belastungszeit [min] | 10 | 20 | 30 | 40 | 50 | 60 |
|---|---|---|---|---|---|---|
| Abgespaltener Chlorwasserstoff [%] | 0 | 0 | 0,005 | 0,060 | 0,16 | 0,310 |

**Patentansprüche**

1. Chlorhaltige Thermoplaste, enthaltend ein m-Aminophenol der Formel I

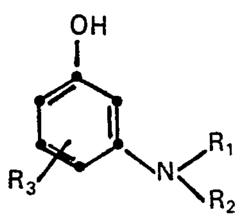

(I)

worin $R_1$ Wasserstoff, $C_1$–$C_{18}$-Alkyl, $C_5$–$C_7$-Cycloalkyl, gegebenenfalls mit $C_1$–$C_4$-Alkyl oder mit Hydroxy substituiertes Phenyl oder eine der Gruppen $-C(R_4)=C(R_5)-COOR_6$, $-CH_2CH_2-CN$, –CO-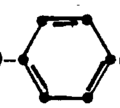oder-CO–$CH_2$–CO–$CH_3$, $R_2$ Wasserstoff, $C_1$–$C_{18}$-Alkyl, $C_5$–$C_7$-Cycloalkyl, gegebenenfalls mit $C_1$–$C_4$-Alkyl oder mit Hydroxy substituiertes Phenyl oder eine Gruppe $-CH_2CH_2-CN$, $R_3$ Wasserstoff, Hydroxy, $C_1$–$C_4$-Alkyl, $C_2$–$C_5$-Alkoxycarbonyl, Aminocarbonyl oder Cyano, $R_4$ und $R_5$ unabhängig voneinander Wasserstoff oder $C_1$–$C_4$-Alkyl und $R_6$ $C_1$–$C_{18}$-Alkyl oder $C_5$–$C_7$-Cycloalkyl bedeuten.

2. Chlorhaltige Thermoplaste nach Anspruch 1, enthaltend ein m-Aminophenol der Formel I, worin $R_1$ Wasserstoff, verzweigtes oder unverzweigtes $C_8$–$C_{16}$-Alkyl, Cyclohexyl, Phenyl, Methylphenyl eine Gruppe $-C(R_5)-COOR_6$, $-CH_2CH_2-CN$, –CO-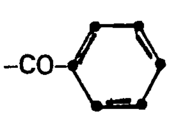oder –CO–$CH_2$–CO–$CH_3$, $R_2$ Wasserstoff, $R_3$ Wasserstoff, Hydroxy, Methyl, Methoxycarbonyl, Aminocarbonyl oder Cyano, $R_4$ und $R_5$ unabhängig voneinander Wasserstoff oder Methyl und $R_6$ Methyl oder Cyclohexyl bedeuten.

3. Chlorhaltige Thermoplaste gemäss Anspruch 1, dadurch gekennzeichnet, dass sie m-Aminophenol, N-Phenyl-m-aminophenol, 2-Amino-4-hydroxybenzamid, 3-Hydroxy-5-methyl-diphenylamin oder 3-(3-Hydroxyanilino)-2-methylacrylsäuremethylester enthalten.

4. Chlorhaltige Thermoplaste nach Anspruch 1, enthaltend ein m-Aminophenol der Formel I in einer Menge von 0,05 bis 5 Gewichtsprozent bezogen auf den chlorhaltigen Thermoplasten.

5. Chlorhaltige Thermoplaste gemäss Anspruch 1, enthaltend zusätzlich einen oder mehrere herkömmliche PVC-Stabilisatoren und/oder Zusätze ausgewählt aus der Gruppe bestehend aus Epoxyverbindungen, Phosphite, organische Metallverbindungen von Metallen der zweiten Haupt- und Nebengruppe des Periodensystems, anorganische Salze von Metallen der zweiten Nebengruppe des Periodensystems und Organozinnverbindungen.

6. Chlorhaltige Thermoplaste gemäss Anspruch 5 enthaltend als herkömmlichen Zusatz mindestens ein Phosphit.

7. Chlorhaltige Thermoplaste gemäss Anspruch 5 enthaltend als herkömmlichen Zusatz mindestens eine Epoxyverbindung und/oder ein Metallcarboxylat oder -phenolat eines Metalls der zweiten Hauptgruppe des Periodensystems.

8. Chlorhaltige Thermoplaste gemäss Anspruch 7 enthaltend zusätzlich mindestens ein Phosphit.

9. Chlorhaltige Thermoplaste gemäss Anspruch 7 enthaltend zusätzlich mindestens ein Zink- oder

Cadmiumcarboxylat oder eine Organozinnverbindung.

10. Chlorhaltige Thermoplaste gemäss Anspruch 9 enthaltend zusätzlich mindestens ein Phosphit.

11. Chlorhaltige Thermoplaste nach Anspruch 1, dadurch gekennzeichnet, dass sie Vinylchloridpolymere sind.

## Revendications

1. Matièred thermoplastiques chlorées qui contiennent un m-amino-phénol répondant à formule I:

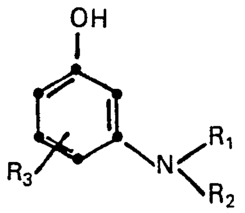

(I)

dans laquelle $R_1$ est l'hydrogène, un alkyle en $C_1$–$C_{18}$, un cycloalkyle en $C_5$–$C_7$, un phényle éventuellement porteur d'un alkyle en $C_1$–$C_4$ ou d'un hydroxy, ou un radical $-C(R_4) = C(R_5)-COOR_6$

$-CH_2CH_2-CN$ -CO- 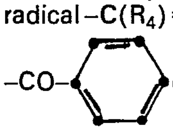 ou $-CO-CH_2-CO-$

$CH_3$, $R_2$ représente l'hydrogène, un alkyle en $C_1$–$C_{18}$, un cycloalkyle en $C_5$–$C_7$, un phényle éventuellement porteur d'un alkyle en $C_1$–$C_4$ ou d'un hydroxy, ou un radical $-CH_2CH_2-CN$, $R_3$ représente l'hydrogène, un hydroxy, un alkyle en $C_1$–$C_4$, un alcoxycarbonyle en $C_2$–$C_5$, aminocarbonyle ou un cyano, $R_4$ et $R_5$ représentent chacun, indépendamment l'un de l'autre, l'hydrogène ou un alkyle en $C_1$–$C_4$ et $R_6$ représente un alkyle en $C_1$–$C_{18}$ ou un cycloalkyle en $C_5$–$C_7$.

2. Matières thermoplastiques chlorées selon la revendication 1 qui contiennent un m-amino-phénol de formule I dans lequel $R_1$ représente l'hydrogène, un alkyle en $C_8$–$C_{16}$ linéaire ou ramifié, un cyclohexyle, un phényle, un méthylphényle ou un radical $-C(R_4) = C(R_5)-COOR_6$, $-CH_2CH_2-$

CN, -CO- 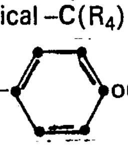 ou $-CO-CH_2-CO-CH_3$, $R_2$ représente l'hydrogène $R_3$ représente l'hydrogène ou un radical hydroxy, méthyle méthoxycarbonyle, aminocarbonyle ou cyano, $R_4$ et $R_5$ représentent chacun, indépendamment l'un de l'autre, l'hydrogène ou un méthyle, et $R_6$ représente un méthyle ou un cyclohexyle.

3. Matières thermoplastiques chlorées selon la revendication 1, caractéisées en ce qu'elles contiennent du m-amino-phénol, du N-phényl m-amino-phénol, de l'amino-2 hydroxy-4 benzamide, de l'hydroxy-3 méthyl-5 diphénylamine ou de 1'(hydroxy-3 anilino)-3 méthyl -2 acrylate de méthyle.

4. Matières thermoplastiques chlorées selon la revendication 1, qui contiennent un m-amino-phénol de formule I en une quantité de 0,05 à 5% en poids par rapport aux matières thermoplastiques chlorées.

5. Matières thermoplastiques chlorées selon la revendication 1, qui contiennent en outre un ou plusieurs stabilisants usuels du PVC et/ou des additifs pris dans l'ensemble constitué par les composés époxydiques, les phosphites, les composés organiques de métaux du deuxième groupe principal ou du deuxième groupe secondaire de la classification périodique, les sels minéraux de métaux du deuxième groupe secondaire de la classification périodique et les composés organostanniques.

6. Matières thermoplastiques chlorées selon la revendication 5, qui contiennent, comme additif usuel, au moins un phosphite.

7. Matières thermoplastiques chlorées selon la revendication 5, qui contiennent, comme additif usuel, au moins un composé époxydique et/ou un carboxylate ou phénolate d'un métal du deuxième groupe principal de la classification périodique.

8. Matières thermoplastiques chlorées selon la revendication 7, qui contiennent, en plus, au moins un phosphite.

9. Matières thermoplastiques chlorées selon la revendication 7, qui contiennent, en plus, au moins un carboxylate de zinc ou de cadmium ou un composé organostannique.

10. Matières thermoplastiques chlorées selon la revendication 9, qui contiennent, en plus, au moins un phosphite.

11. Matières thermoplastiques chlorées selon la revendication 1, caractérisées en ce qu'elles sont des polymères du chlorure de vinyle.

## Claims

1. A chlorine-containing thermoplastic, which contains an m-aminophenol of the formula I

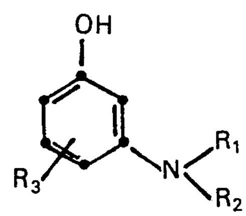

(I)

in which $R_1$ is hydrogen, $C_1$–$C_{18}$-alkyl, $C_5$–$C_7$-cycloalkyl, unsubstituted or $C_1$–$C_4$-alkyl-substituted or hydroxyl-substituted phenyl or one of the groups $-C(R_4) = C(R_5)-COOR_6$, $-CH_2CH_2-CN$,

-CO- 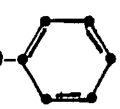 or $-CO-CH_2-CO-CH_3$, $R_2$ is hydrogen, $C_1$–$C_{18}$-alkyl, $C_5$–$C_7$-cycloalkyl, unsubstituted or $C_1$–$C_4$-alkyl-substituted or hydroxyl-substituted phenyl or a $-CH_2CH_2-CN$ group, $R_3$ is hydrogen, hydroxyl, $C_1$–$C_4$-alkyl, $C_2$–$C_5$-alkoxycarbonyl, aminocarbonyl or cyano, $R_4$ and $R_5$ independently of one another are hydrogen or $C_1$–$C_4$-alkyl and $R_6$ is $C_1$–$C_{18}$-alkyl or $C_5$–$C_7$-cycloalkyl.

2. A chlorine-containing thermoplastic according to claim 1, which contains an m-aminophenol of the formula I, in which $R_1$ is hydrogen, branched or unbranched $C_8$–$C_{16}$-alkyl, cyclohexyl, phenyl,methylphenyl or a $-C(R_4)=C(R_5)-COOR_6$, $-CH_2CH_2-CN$, $-CO-$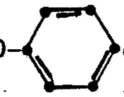or $-CO-CH_2-CO-CH_3$ group, $R_2$ is hydrogen, $R_3$ is hydrogen, hydroxyl, methyl, methoxycarbonyl, aminocarbonyl or cyano, $R_4$ and $R_5$ independently of one another are hydrogen or methyl and $R_6$ is methyl or cyclohexyl.

3. A chlorine-containing thermoplastic according to claim 1, which contains m-aminophenol, N-phenyl-m-aminophenol, 2-amino-4-hydroxybenzamide, 3-hydroxy-5-methyl-diphenylamine or methyl 3-(3-hydroxyanilino)-2- methylacrylate.

4. A chlorine-containing thermoplastic according to claim 1, which contains an m-aminophenol of the formula I in an amount of 0.05 to 5 per cent by weight, based in the chlorine-containing thermoplastic.

5. A chlorine-containing thermoplastic according to claim 1, which additionally contains one or more conventional PVC stabilisers and/or additives selected from the group comprising epoxy compounds, phosphites, organic metal compounds of metals of the second main group and sub-group of the periodic table, inorganic salts of metals of the second sub-group of the periodic table, and organo-tin compounds.

6. A chlorine-containing thermoplastic according to claim 5, which contains, as a conventional additive, at least one phosphite.

7. A chlorine-containing themoplastic according to claim 5, which contains, as a conventional additive, at least one epoxy compound and/or one metal carboxylate or phenolate of a metal of the second main group of the periodic table.

8. A chlorine-containing thermoplatic according to claim 7, which additionally contains at least one phosphite.

9. A chlorine-containing thermoplastic according to claim 7, which additionally contains at least one zinc carboxylate or cadmium carboxylate or an organo-tin compound.

10. A chlorine-containing thermoplastic according to claim 9, which additionally contains at least one phosphite.

11. A chlorine-containing thermoplastic according to claim 1, which is a vinyl chloride polymer.